Europäisches Patentamt

European Patent Office

Office européen des brevets

(19)

(11) Publication number: **0 353 373**
A1

## (12) EUROPEAN PATENT APPLICATION

(21) Application number: 88830226.2

(51) Int. Cl.⁴: **A43B 17/14 , B29C 35/12**

(22) Date of filing: 30.07.88

(43) Date of publication of application:
07.02.90 Bulletin 90/06

(84) Designated Contracting States:
AT BE CH DE ES FR GB GR IT LI LU NL SE

(71) Applicant: DITTA MEME MARKETING SRL
Loc. Passo Varano 379A
Ancona(IT)

(72) Inventor: Salati, Bruna
Via Alpi 25
Ancona(IT)

(74) Representative: Sassatelli, Franco T., Dr.
c/o INIP via Ruggi 5
I-40137 Bologna(IT)

(54) Insole with leather foot leaning base and aeration canals.

(57) The used material is obtained by coupling the leather (1) by means of glues with a small sheet in PVC expanded plastic material (2). Manufacturing can be carried out under pressing with beating die carrier (3) which, on small blocks (4) in isolating material, bears an interchangeable mold (5) with outer cutting punching profile (6) and inside system of pressing linear reliefs (7). When the above mold (5) sinks on the working material laid on the punching plane (8), it carries out the punching shape and its compression on the reliefs (7). By means of a copper strap conductor (10), a high frequency current generator (9) then transmits current to the mold (5). The current passing through the punching form and the checking plane bonded with the generator (9), lets the PVC melt on the pressing lines. An insole with shaped leaning base will thus result which consists of a system of channels formed on the melting lines, giving rise to a ventilation of the foot and its soft contact on the interposed emerging shock absorbing parts.

FIG.4

**Leather sole for foot leaning base with aeration canals delimiting parts with soft contact.**

The invention refers to a sole for footware with leather leaning base characterized by fanning canals which delimit emerging stuffed parts to allow a soft contact of the foot.

The present shoe soles with leaning base for the foot in leather are carried out with manual practicability, by using glues and fitting a leather form on a structuration base of various material. The proceeding implies the necessity of composing the different parts and of then fitting the leather part under the edge of the structuration shape. This causes high manufacturing costs and requires a particularly qualified staff; moreover, the finished product may show difformities and underlies to degrading in connection with the precariousness of the binding condition. The said precariousness depends on the fact that fitting the leather part below the border, as the glue yields or in the case it was misapplied, may lead to chipping of the lining on the bending border.

The invention enables to solve the problem by adopting a new conception manufacturing process to carry out according to mnemonic checkin sequences, as far as manufactured product is concerned, and by means of sequences to carry out automatically as to the insole manufacturing. Furthermore, the invention increases the effect of the joint composition of the insole components. As to the finished product, an insole is manufactured with a shaped leaning base characterized by a system of fanning canals for the foot, with shock absorbing parts for a soft contact. In particular, the shaping proceeding, which is performed by melting the stuffing material, increases the permanent binding condition of the said material to the leather part.

Substantially, the system according to the invention foresees the preliminary carrying out of the manufactured product by coupling, by means of glues in a solidarily working way, a part in leather 1 with a small plate in PVC expanded plastic material 2. This manufactured part is then treated under a press of different kind and drive, by using a beating mold carrier 3 which holds an interchangeable mold 5 on blocks 4 conformed with electrically isolating material. This mold with perimetral punching cutting profile 6, is characterized by an inside system of ideally linear pressing reliefs 7. The descent of the mold 5 on the manufacture material, previously laid on the checking plane 8, determines the punching shape and its compression by means of the relief system 7. A high frequency current generato 9 then transmits current to the said mould 5 by means of a conducting copper strap 10; this current passing through the punching shape causes the expanded material (PVC) melting in the pressed parts, thus making permanent the sole shape. This current is caught by the checking plane 8 which is mass-connected with the generator. As soon as the required temperature has been reached, the high frequence current flux is interrupted allowing to the forming part to cool down, which shows a leaning base characterized by two parts: a canal system for the foot aeration and emerging stuffed parts which act as cushions and form a soft leaning system for the foot.

For the sole compacting, in a version one part either in felt or other material is foreseen on the bottom, previously integrated with the expanded material in PVC forman only one whole with the leather.

The invention essentially uses the natural propriety of the expanded PVC material to overheat and melt when a flux of high frequency current is passing through. This allows to form the sole only by modifying its thickness according to a pre-established scheme of pressure lines determined by a system of reliefs 7 of the PVC sheet. This can be obtained by initially bringing the PVC sheet into forming position by pressing and subsequently by modifying its structure without damaging the leather.

An execution version of the preceeding is illustrated in indicative and not limiting way in the drawings of table 1. With reference to this one, fig. is the view of the forming phase with sinking mold. Fig. 2 is the view of a part of the manufactured product. Fig. 3 is the view of a part of the manufactured product. Fig. 4 is the view of a sole manufactured according to the invention.

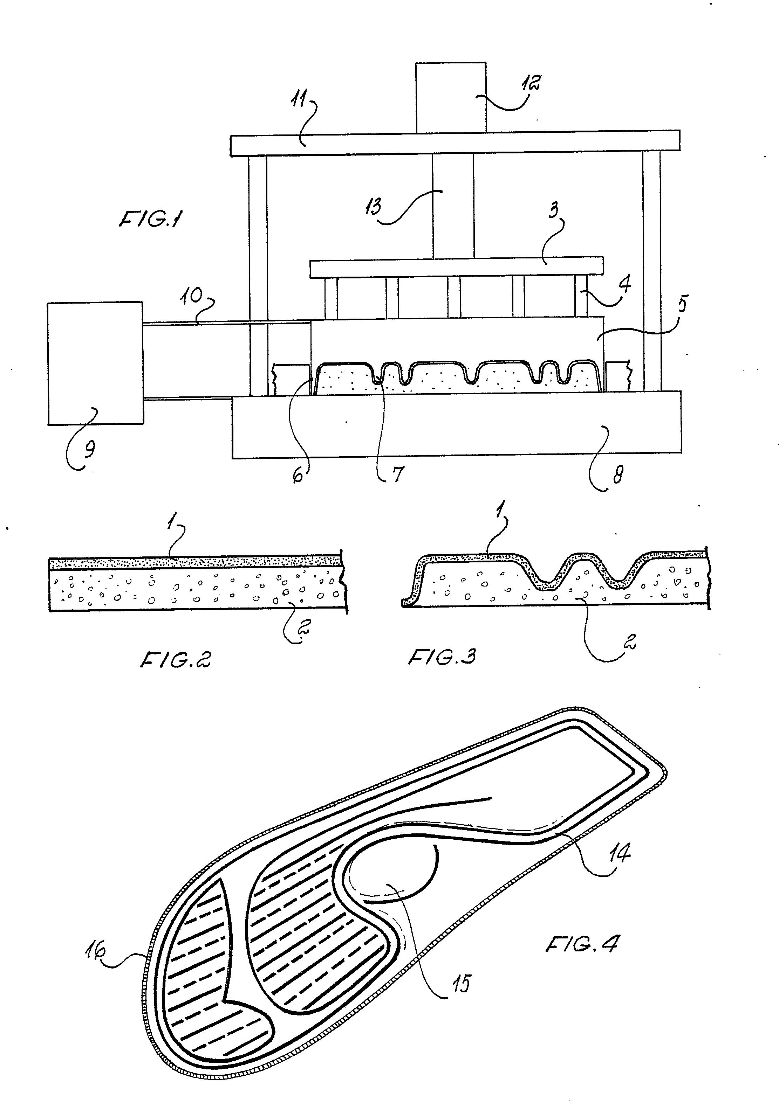

For manufacturing, a press 11 with hydraulic executing device 12 and stem 13 bearing stamp 3, is foreseen. The sole thus obtained shows a leaning base in leather with canal system 14, emerging upholstering parts 15 and perimetral border 16. The said sole, furthermore, turns out to be particularly appreciated in connection with the immediate view perception of the emerging cushion-like leaning parts. The presence of these emerging parts increases the visibility of the difference reference stamps which can be executed on them with the system of the pressing linearity.

The shape of the insoles, of the two parts forming its shaping, the materials and anything else in this connection may be foreseen in different ways.

**Claims**

1) Leather sole for foot leaning base with aeration canals delimiting parts with soft contact, characterized by the fact that the preliminary carrying out of the working product is foreseen with solidary coupling, by means of glues, of one part in leather (1) with a sheet of expanded plastica material (2) in PVC. This product is subsequently worked under a press (11), by using a beating stamp-bearer (3) which supports an interchangeable mould (5) on electrically insulated small blocks (4). This mould with cutting punching profile (6) is foreseen with an inside system of linear pressing reliefs (7). When sinking on the working material, on the checking plane (8), the mould determines the punching shape and its compression by means of the reliefs (7). A high frequency current generator (9) then transmits current to the mould (5) through a copper band conductor (10). The current passing through the punching form causes the expanding material to melt, making thus permanent the sole shaping. As soon as the required temperature has been reached, the current flux is interrupted thus allowing the forming part to cool down, which shows a shaped leaning base characterized by two parts: a canal system (14) for the foot aeration, and emerging stuffed parts (15), which act as cushions and generate a soft leaning for the foot.

2) Leather sole, as per claim 1, characterized by the fact that for its compacting, a part in felt or other material can be foreseen on the bottom and previously integrated with PVC expanded material.

3) Leather sole, as per claim 1, characterized by the fact that the presence of the emerging leaning parts (15) increases the visual effect of reference marks, if any, which can be performed on them.

FIG.1

11

12

13

3

4

10

5

9

6

7

8

FIG.2

1

2

FIG.3

1

2

FIG.4

14

16

15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 061 505  (C. FREUDENBERG)<br>--- | 1-3 | A 43 B  17/14<br>B 29 C  35/12 |
| A | US-A-2 407 833  (B. JABLONSKY)<br>--- | 1 | |
| A | GB-A-2 157 227  (AISIN SEIKI K.K.)<br>------ | 1 | |

TECHNICAL FIELDS SEARCHED (Int. Cl.4)

A 43 B
B 29 G

The present search report has been drawn up for all claims

| Place of search | Date of completion of the search | Examiner |
|---|---|---|
| THE HAGUE | 21-02-1989 | DECLERCK J.T. |